# EUROPEAN PATENT APPLICATION

(11) **EP 4 660 853 A1**
(43) Date of publication of application: **10.12.2025**
(21) Application number: 24179900.6
(22) Date of filing: 04.06.2024
(51) Int. Cl.: G06F 21/44, H04W 4/80, G06Q 10/0631, H04L 9/40

(54) **METHOD FOR OPERATING A SCANNER SYSTEM, CORRESPONDING SCANNER SYSTEM AND SCANNING DEVICE**

(71) Applicant: Workaround GmbH, 81379 München (DE)
(72) Inventor: MESSAN, Peter-Newman, 81379 München (DE); PETRUCH, Sebastian, 81379 München (DE); BLITZ, Patrick, 81379 München (DE)
(74) Representative: Flach Bauer & Partner Patentanwälte mbB

(57) **Abstract**

A method for operating a scanner system (14) is provided. The scanner system (14) has a scanning device (16) portable by a user (U), and an interacting device (20). The method comprises:
- broadcasting an advertising packet (A1) by a first device (44), being the interacting device (20) or the scanning device (16), the advertising packet (A1) comprising identification information and payload information,
- receiving the advertising packet (A1) by a second device (46),
- verifying the identification information of the advertising packet (A1) against stored, expected identification information, and
- if the verification has been positive, performing an action by the second device (46) based on the payload information,
wherein the action includes, always or when one or more prerequisites are met, broadcasting an advertising packet (A2) as a reaction.

Further, a scanner system (14) and a scanning device (16) are provided.

## Description

The invention relates to a method for operating a scanner system, a corresponding scanner system and a scanning device for a scanner system.

Scanner systems having portable scanning devices, such as barcode scanners, are known, for example from DE 10 2020 106 369 and DE 10 2020 130 231 A1.

In such systems, the scanning devices usually communicate with a system control, wherein the system control sends data to and receives data from the scanning devices.

Scanning devices of such a scanner system may be present in any connectivity state, i.e. not connected to any other device, or paired to another device. At the same time, communication with scanning devices in any connectivity state is desired but without interfering or altering any already established connection to other devices.

It is known to include a second communication module in the connectivity devices dedicated to this kind of communication. Providing a second communication module, however, increases complexity and costs of the scanning devices.

It is thus an object of the invention to provide a method for operating a scanning system, a scanner system as well as a scanning device that allow communication to and between scanning devices in any connectivity state independently and non-interferingly of other wireless communication connections at low costs.

For this purpose, a method for operating a scanner system is provided. The scanner system comprises at least one scanning device portable by a user and an interacting device. The scanning device comprises a code reader and a wireless communication module, and the interacting device comprises a wireless communication module. The method comprises:
- broadcasting an advertising packet by a first device, being the interacting device or the scanning device, the advertising packet comprising identification information and payload information,
- receiving the advertising packet by a second device, being the scanning device or the interacting device, respectively,
- verifying the identification information of the advertising packet against stored, expected identification information by the second device, and
- if the verification has been positive, performing an action by the second device based on the payload information of the advertising packet,
wherein the action includes, always or when one or more prerequisites are met, broadcasting an advertising packet as a reaction.

By using advertising packets for bi- or multidirectional communication, it is possible to communicate to and between devices which are not actively paired, i.e. not having an established wireless communication connection with each other. At the same time, even if they are paired with another device, advertising packets may still be received using the same communication module that is also used for the establish wireless communication connection. Thus, a way of communicating non-interferingly and independently of the connectivity state is provided which does not necessitate another wireless communication module.

The advertising packet may be a ADV_IND or ADV_NONCONN_IND packet as defined in the Bluetooth Low Energy (BLE) standard, in particular any version of the BLE standard, e.g. Bluetooth versions 4.0, 4.1, 4.2, 5.0, 5.1, 5.2, 5.3, or 5.4. For example, within this disclosure, the Bluetooth Core Specification Version 5.1 of December 9, 2020 is meant when referring to "the Bluetooth standard" or "the BLE standard".

It is also conceivable that the advertising packet may be a ADV_SCAN_RSP packet as defined in the BLE standard.

In particular, the second device has not the Central role, and the first device is non-connectable and/or configured as a beacon.

For example, the first device is the interacting device and the second device is the scanning device, or vice versa.

In an embodiment, the wireless communication modules of the interacting device and of the scanning device are BLE enabled modules, allowing a very efficient communication.

For example, BLE advertisement channels are 37 (2.402 GHz), 38 (2.426 GHz) and 39 (2.480 GHz).

In particular, if the one or more prerequisites are not met, no action is taken after checking the prerequisites.

In an aspect, the advertising packet broadcasted as a reaction comprises identification information of the second device and payload information, allowing to identify the advertising packet broadcasted as a reaction.

For example, the advertising packet broadcasted as a reaction is broadcasted in reaction to receiving the advertising packet from the first device, e.g. it is a consequence of the reception of the advertising packet from the first device.

The advertising packet broadcasted as a reaction is, in particular, not independent of the reception of the advertising packet from the first device.

In particular, the advertising packet broadcasted as a reaction is broadcasted in the advertising channel to all devices in range.

For guiding the user, the action of the second device may include, always or when one or more prerequisites are met, sending an e-mail to a predefined recipient, and/or providing feedback to the user carrying the second device, in particular optical feedback, acoustic feedback and/or tactile feedback.

The optical feedback may be provided by a display or a light source, for example an LED, of the second device. Acoustic feedback may be provided by a speaker of the second device. Tactile feedback may be provided by a vibration motor of the second device.

In an embodiment, the identification information of the advertising packet, the identification information of the advertising packet broadcasted as a reaction, and/or the expected identification information comprises information for identifying a sender of the respective advertising packet or the expected sender, respectively, in particular a universally unique identifier (UUID) and/or a company identifier, allowing to reliably identify the sender.

In an aspect, verifying the identification information of the advertising packet includes verifying that the advertising packet has been send by the expected sender, in particular by comparing the UUID and/or the company identifier of the identification information of the advertising packet and of the stored, expected identification information, ensuring that the communication is between the correct parties.

To simplify the advertising packet, the payload information of the advertising packet and the advertising packet broadcasted as a reaction may comprise payload content contained in structured data, in particular in a protocol buffer message, wherein the action by the second device is based on the payload content of the structured data.

The second device may parse the structured data, in particular the protocol buffer (protobuf) message to retrieve the payload content.

In an embodiment, a wireless communication connection between the first device and the second device using the respective wireless communication modules is active before the first device broadcasts the advertising packet and/or that the wireless communication connection is maintained at least during receiving the advertising packet and verifying the identification information of the advertising packet by the second device, in particular the wireless communication connection is also maintained at least during the action by the second device. This way, the established wireless communication connection is not disturbed by the communication using the advertising packets.

For example, the devices have been paired beforehand.

The advertising packets are in particular broadcasted parallel to packets of the established wireless communication connection.

In order to allow other means of connecting and/or controlling the scanning devices, the scanner system may comprise at least one connectivity device, wherein a wireless communication connection between the at least one connectivity device and the second device using the respective wireless communication modules is active before the first device broadcasts the advertising packet and/or that the wireless communication connection is maintained at least during receiving the advertising packet and verifying the identification information of the advertising packet by the second device, in particular the wireless communication connection is also maintained at least during the action by the second device.

In an aspect, no wireless communication connection between the second device and at least one of the first device or a connectivity device of the scanner system using the respective wireless communication modules is active before the first device broadcasts the advertising packet, allowing to also communicate with unpaired devices.

In an embodiment, the one or more prerequisites for broadcasting an advertising packet as a reaction by the second device and/or for providing feedback to the user by the second device are stored in the second device and/or are included in the advertising packet broadcasted by the first device, in particular in the payload information. This way, the action to be taken by the second device may be specifically addressed to a certain situation and/or device.

The one or more prerequisites may be part of the payload content.

In an aspect, the one or more prerequisites include that the UUID of the second device matches a provided pattern or provided UUID, that the signal strength of the advertising packet at the second device is above a threshold; and/or that the signal strength of the advertising packet at the second device is below a threshold, allowing for very specific communication and control of second devices.

For example, the threshold is stored in the second device or included in the payload information, in particular in the payload content.

In order to obtain information about the state of the system and/or a specific device, the advertising packet broadcasted as a reaction comprises as part of the payload information, in particular as part of the payload content, telemetry data, in particular the current temperature of the second device and/or the charging state of a battery of the second device.

In an embodiment, the first device and/or another second device, in particular another scanning device, receives the advertising packet broadcasted as a reaction, verifies the identification information and, if the verification has been positive, performs an action, in particular changing its configuration, providing feedback, broadcasting an advertising packet and/or sending a corresponding message to a system control of the scanner system. This way, many scanning devices may be controlled with little effort.

The system control may be in the cloud and may provide information to a supervising user (e.g. via a dashboard).

The first device may also initiate an alert, like an acoustic alert.

In an embodiment, the interacting device is a stationary device, allowing for location based actions to be carried out.

Alternatively or in addition, the interacting device is a portable device, in particular a smart device and/or a connectivity device, allowing communication between two portable device without the need for pairing, e.g. searching a scanning device with the interacting device.

The interacting device may be any device that interacts wirelessly with the scanning device using advertising packets.

Further, for above mentioned purpose, a scanner system is provided, the scanner system comprises at least one scanning device portable by a user, and an interacting device, wherein the at least one scanning device and the interacting device are configured to carry out a method as described above.

For improved comfort, the scanner system may comprise an article of clothing, in particular a hand garment, which is designed to attach the scanning device to the body of the user, in particular wherein the article of clothing has an actuating element which is connected to the scanning device such that it serves as an input means for the scanning device and/or can actuate the scanning device. This way, the scanning device may be used flexibly without being held in the hand.

For above mentioned purpose, a scanning device for a scanner system is further provided. The scanning device is configured such that, in conjunction with an interacting device of the scanner system, it is capable of carrying out a method as described above.

The features and advantages described with respect to the method also apply to the scanner system and/or the scanning device and vice versa.

Further features and advantages will be apparent from the following description as well as the accompanying drawings, to which reference is made. In the drawings:
- Fig. 1: shows a schematic view of an embodiment of a scanner system according to an embodiment of the invention with a scanning device according to an embodiment of the invention,
- Fig. 2: a scanning device of the system of Figure 1 in a more detailed schematic view,
- Fig. 3: a schematic flowchart of a method according to an embodiment of the invention, and
- Figs. 4, 5, 6: show a reduced and schematic view of a scanner system of Figure 1 during the course of different embodiments of the method.

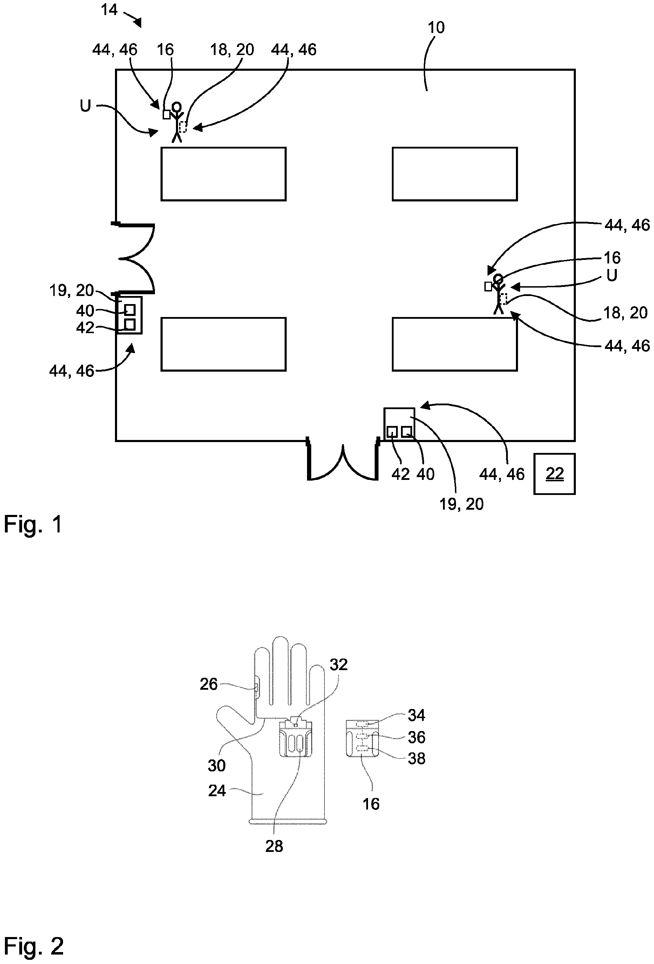

Figure 1 shows a schematic view of a shop floor 10, e.g. a warehouse or a manufacturing plant having a plurality of workstations, shelves or other places to carry our tasks.

A scanner system 14 is used on the shop floor 10 comprising a plurality of scanning devices 16, optional connectivity devices 18, a plurality of stationary devices 19, and a system control 22.

The connectivity devices 18 and the stationary devices 19 may interact with the scanning device 16 and therefore constitute interacting devices 20.

An interacting device 20 may also be a device other than a connectivity device 18 or a stationary device 19, for example, a smart device.

The system control 22 controls the scanner system 14 and is, for example, an application running on a server (single server or distributed server), like a cloud server or a server on premise.

The system control 22 comprises, for example, a server (single server or distributed server) on which a software for controlling the scanning device 16 and the connectivity devices 18 is executed, and/or a server (single server or distributed server) on which a software receiving data obtained by the scanning device 16 is executed such as an enterprise resource planning system (ERP system). Both servers may be a local server or a cloud server. It is also conceivable that the software for controlling the scanning device 16 and the connectivity devices 18 and the software receiving data obtained by the scanning device 16 are executed on the same server.

The system control 22 may have an interface, like a dashboard, to provide information to a supervising user.

The scanning devices 16 and the optional connectivity devices 18 are carried by users U, e.g. workers working on the shop floor 10.

For example, each user U carries one connectivity device 18 and one or more scanning devices 16.

Figure 2 shows an article of clothing 24 and one of the scanning devices 16 in a schematic view. The article of clothing 24 is worn by the user U.

The article of clothing 24 is in this example a hand garment, like a glove or a glove-like garment as described in DE 10 2021 126 552 A1 or US 2023/0112442 A1.

The article of clothing 24 comprises an actuating element 26 and a holder 28.

The actuating element 26 may be a trigger button or a capacitive sensor and is located at the index finger of the user's hand when the hand garment is being worn.

The holder 28 is located at the back of the hand when the hand garment is being worn.

The holder 28 is designed to receive the scanning device 16, wherein the actuating element 26 is connected to the scanning device 16 in the holder 28 via a conductor 30, for example a cable or flex-PCB integrated into the article of clothing 24, and a contact point 32.

The hand garment, with a scanning device 16 inserted into the holder 28, is worn by the user U so that the user U can easily activate the scanning device 16 by actuating the actuating element 26 with the thumb.

The scanning device 16 comprises a code reader 34, a control unit 36 and a wireless communication module 38.

The control unit 36 and the code reader 34 may be formed as a single part or a part of the code reader 34, for example a decoder, is integrated into the control unit 36.

The code reader 34 (also called scan engine), which may comprise a camera and a decoder, is an optical code reader 34 configured to read machine-readable codes, like barcodes, two-dimensional codes, for example QR codes, data matrix codes or the like, or any other optical machine-readable code.

It is also conceivable that the code reader is another type of code reader, for example for reading RFID-tags.

The wireless communication module 38 is, for example, a Bluetooth low energy (BLE) module, e.g. for communicating wirelessly under the BLE Standard, in particular any version of the BLE standard, e.g. Bluetooth versions 4.0, 4.1, 4.2, 5.0, 5.1, 5.2, 5.3, or 5.4, more particularly the Bluetooth Core Specification Version 5.1 of December 9, 2020.

The connectivity device 18 is a wearable smart device, preferably a smartphone. However, the connectivity device 18 can also be, for example, a tablet, a laptop, a smart watch or smart glasses.

The connectivity device 18 has a control unit comprising a first communication module and a second communication module.

The first communication module is designed to communicate with the system control 22. The first communication module is, for example, a WLAN module or a LAN module.

The second communication module is designed to communicate with the scanning device 16 wirelessly. For example, the second communication module is designed to communicate with the scanning device 16 using the Bluetooth Low Energy standard, or via WLAN.

During use of the scanner system 14, the connectivity device 18 receives from the scanning device 16 data obtained by the code reader 34, and relays the data and/or information based on the data to the system control 22.

To this end, the connectivity device 18 and the scanning device 16 have established a wireless communication connection, for example using the Bluetooth protocol and the respective wireless communication module. The scanning device 16 is paired with the connectivity device 18, in particular in terms of the roles of the BLE standard, the connectivity device 18 is the Central and the scanning device 16 is a Peripheral.

Thus, the connectivity device 18 provides a communication path between the scanning device 16 and the system control 22.

In cases, in which the stationary device 19 provides a communication path between the scanning device 16 and the system control 22, the connectivity device 18 is not necessary.

The stationary devices 19 are fixedly positioned and certain places of the shop floor 10, for example in the vicinity of an exit, as shown in Figure 1.

The stationary device 19 comprises a wireless communication module 40 on its own, which is of the same type as the wireless communication module 38 of the scanning device 16. In particular, the wireless communication module 40 of the stationary device 19 is a BLE module.

The stationary devices 19 may also comprise a further communication module 42 for communicating with the system control 22. This further communication module 42 may be a module for cable-bound communication, like LAN, or a wireless communication module, like WLAN.

A scanning device 16 may be paired with a stationary device 19 using the wireless communication modules 38, 40, in particular according to the respective BLE standard. For example, the stationary device 19 is the Central and the scanning device 16 is the Peripheral.

In this case, the stationary device 19 provides a communication path between the scanning device 16 and the system control 22. A connectivity device 18 is not necessary under these circumstances and therefore optional.

Independently from the connectivity state, i.e. whether the scanning device 16 is paired with the stationary device 19 or the connectivity device 18, and independently from the question whether the scanning devices 16 communicates with the system control 22 via a connectivity device 18 or the stationary device 19, or even in cases in which a scanning device 16 is not paired with any of the stationary devices 19 or connectivity devices 18, the scanning devices 16 may communicate with an interacting device 20, being a connectivity device 18 and/or a stationary device 19.

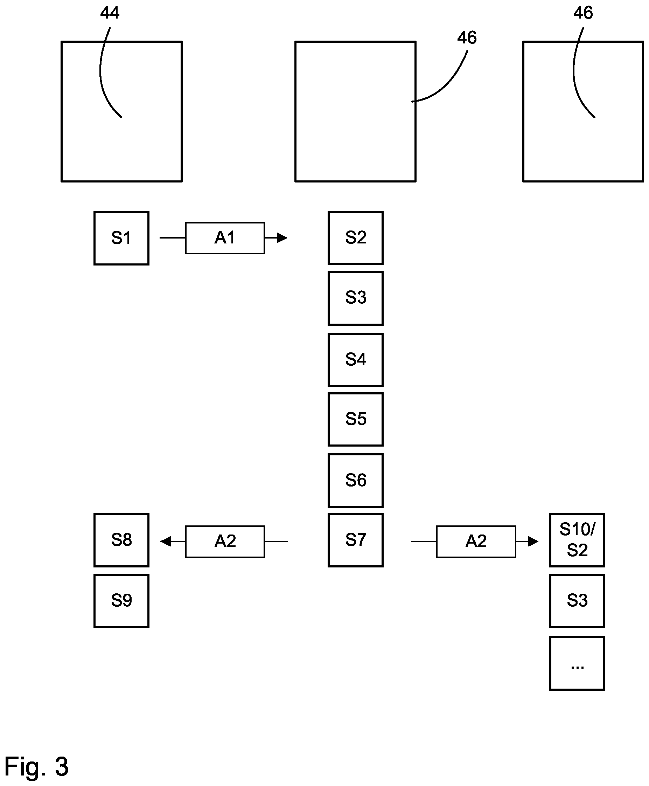

A method for communicating is shown in Figure 3 as a flowchart.

The communication may be initiated by either one of the interacting device 20 or the scanning device 16, called the first device 44 in the following. The device responding to the first device 44 will be called second device 46 in the following, which may be a scanning device 16 or an interacting device 20.

To initiate communication, the first device 44 starts broadcasting an advertising packet A1 at S 1.

The advertising packet A1 conforms to the communication standard, for example to the BLE standard, e.g. versions 4.0, 4.1, 4.2, 5.0, 5.1, 5.2, 5.3, or 5.4 of the Bluetooth standard, more particularly the Bluetooth Core Specification Version 5.1 of December 9, 2020. The advertising packet A1 is thus an advertising packet defined in the respective standard.

The advertising packet A1 is broadcasted in one or all of the dedicated advertisement channels, for example BLE channel 37 at 2.402 GHz, BLE channel 38 at 2.426 GHz and BLE channel 39 at 2.480 GHz.

The advertising packet A1 may be an ADV_IND or ADV_NONCONN_IND packet.

For example, the first device 44 is acting as a non-connectable device and/or is configured to be a beacon.

The advertising packet A1 comprises identification information and payload information.

The identification information of the advertising packet A1 comprises information that allows a receiver of the advertising packet A1 to identify the sender. The information may be the very specific universally unique identifier (UUID) of the first device 44 and/or a company identifier, e.g. of the manufacturer of the first device 44.

The UUID is for example a 16 bit UUID.

In cases that only the company identifier of the manufacturer is part of the identification information, the identification of the sender is a more general identification without specifically identifying a single device.

The payload information includes, in particular consists of structured data comprising payload content. For example, the structured data is a protocol buffer message (protobuf message) in which the payload content is included.

The payload content may comprise various information that is to be communicated to the second device 46.

For example, the payload content includes information to be broadcasted to the scanning devices 16, a request to send telemetry data, or the like.

At S2, the second device 46 then receives the advertising packet A1.

With the received advertising packet A1, the scanning device 16 firstly verifies the sender of the advertising packet A1 at S3.

To this end, the second device 46 has stored therein expected identification information which enables identifying the sender of the advertising packet A1.

For example, the expected identification information also includes one or more UUIDs and/or one or more company identifiers.

The scanning device 16 compares the identification information received with the advertising packet A1 with the stored, expected identification information, for example whether a UUID and/or a company identifier in the identification information of the advertising packet A1 can be found in the expected identification information stored in the second device 46.

If the comparison is successful, the verification is positive and the second device 46 then reads the payload information at S4. Otherwise the second device 46 ignores the advertising packet A1.

For example, the second device 46 parses the structured data, for example the protocol buffer message and retrieves the payload content.

At S5, the second device then performs an action based on information in the payload content.

The action may be carried out always when the advertising packet A1 has been received or may be subject to a condition that one or more prerequisites have to be met.

The prerequisites may be stored in the second device 46 and/or may be part of the payload content or other parts of the payload information.

A prerequisite may be that the signal strength of the signal with which the advertising packet A1 has been received by the second device 46 is above or below a threshold (the signal strength being an indicator of distance). The threshold may be stored in the second device 46 or is included in the payload content.

Another prerequisite may be that the distance between the first device 44 and the second device 46 is above or below a threshold.

A further, prerequisite is that the UUID (or any other identifier) of the second device matches a provided pattern or a provided UUID (or any other identifier), e.g. provided in the payload content.

If the prerequisites have been met, the action is performed at S6 by the second device 46 and includes broadcasting an advertising packet A2 as a reaction to the received advertising packet A1.

Further, the action may include that feedback is provided to the user U carrying the second device 46 (e.g. the scanning device 16). The feedback may be optical feedback, acoustic feedback and/or tactile feedback. The action may include sending an e-mail to a predefined recipient.

To this end, the second device 26, in particular the scanning device 16 comprises a display, a light source, for example an LED, a speaker and/or a vibration module.

It is also conceivable as an independent aspect, that the action does not comprise broadcasting an advertising packet A2 but providing feedback to the user U and/or sending an e-mail to a predefined recipient.

If at least one of the prerequisites have not been met, no action is taken.

At S7, the second device 46 then broadcasts the advertising packet A2 as a reaction. The advertising packet A2 is also broadcasted through the advertising channels according to the BLE standard and it is therefore broadcasted to all devices in range, in particular as the format of an advertising packet does not provide to address a specific recipient.
and comprises, in the same way, identification information and payload information. In particular, the payload information is provided in structured data, e.g. a protobuf message.

The identification information in the advertising packet A2 broadcasted as a reaction comprises information allowing to identify the second device 46 as its sender, either specifically or generally.

To this end, the identification information of the advertising packet A2 may comprise the UUID of the second device 46 and/or a company identifier.

The payload information may include information requested by the first device 44, like telemetry data, for example the current temperature of the second device 46 and/or a charging state of a battery of the second device 46.

It is also conceivable, that the payload information of the advertising packet A2 send as a reaction is the same as the payload information as the initial advertising packet A1, i.e. that the second device 46 echoes the received advertising packet A1.

The advertising packet A2 broadcasted as a reaction may be received at S8 by the first device 44.

The first device 44 then verifies the identification information with expected identification information stored within the first device 44 and then, if the verification has been positive, reads the payload content of the advertising packet A2.

Based on the payload content, the first device 44 may then by itself perform an action (S9), for example sending a corresponding message to the system control 22, like the requested telemetry data.

In addition or alternatively, the advertising packet A2 broadcasted as a reaction may be received by another second device 46 at S 10.

The second device may verify the identification information payload information as explained under S3 and S4 above.

The further second device 46 may then also carry out the specific action as described at S5, S6.

This way, messages as part of the payload information can be distributed to any second device 46, even second devices 46 not directly connected to the system control 22. For example, the payload information includes the instructions to sound an alarm on the second device 46 and echo the advertising packet again. This way, all users U can be alerted almost immediately in a simple and efficient manner without the need for much infrastructure.

Of course, the further second device 46 may broadcast the advertising packet A2 even to further second devices 46 and/or a first device 44.

In order to address payload content to only a group of or a very specific second device 46, one or the prerequisite may be that the UUID or any other specific identifier of the second device 46 that is addressed matches a provided pattern or a provided UUID (or another identifier) also being part of the payload content.

To disable communication between second devices 46 with one another, it is conceivable that the expected identification information for the second devices 46 does not include the UUID and/or the company identifier used by the second devices 46 in the identification information of advertising packets broadcasted by them.

The method (S1 to S10) is independent of whether the second device 46 is paired with a first device 44 or a connectivity device 18. Thus, a wireless communication connection between the second device 46 and the first device 44 and/or a connectivity device 18 may be active even before the first device 44 broadcasts the advertising packet A1 at S1. The wireless communication connection may also be maintained throughout the further course of the method, in particular during receiving the advertising packet A1 (S2), verifying the identification information of the advertising packet A1 (S3), reading the payload content (S4) and performing the action (S5) by the second device 46.

Thus, advertising packets are broadcasted parallel to any established wireless communication connection on the advertising channel. The established wireless communication connections use all other channels except the advertising channels as set forth in the BLE standard, so that no interference occurs.

It is also conceivable that no wireless communication connection between the second device 46 and any other device, in particular a first device 44 or a connectivity device 18 is active before or during the course of the method as explained above.

This way, a very effective way for communication between first and second devices 44, 46 in any connectivity state is provided which is independent of and non-interfering with any establish wireless communication connection even though the same wireless communication module is used.

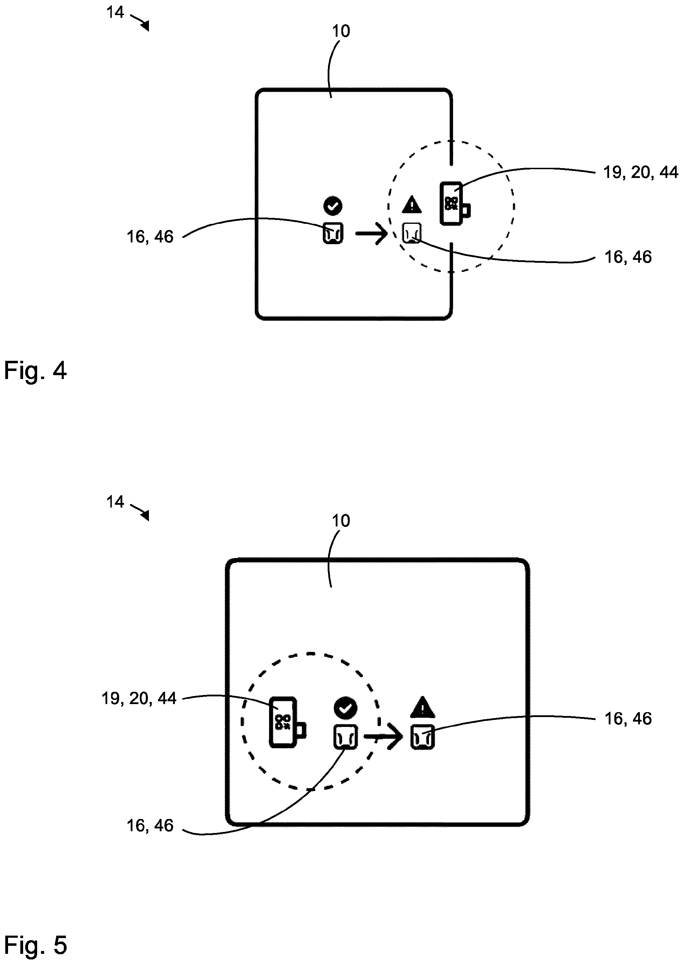

In Figure 4 a very schematic and reduced example of a scanner system 14 is shown.

In this embodiment, the first device 44 is an interacting device 20, e.g. a stationary device 19, and the second device 46 is a scanning device 16. The scanning device 16 is moved within the vicinity, i.e. a certain distance to the interacting device 20, as indicated by the arrow in Figure 4. Once the scanning device 16 is too close to the interacting device 20 - i.e. within the threshold being indicated with the dashed line around the interacting device 20 - the scanning device 16 will provide feedback to the user, e.g. give an alarm.

In order to achieve this, the interacting device 20 broadcasts the advertising packet A1 in regular intervals (S1). The advertising packet A1 comprises as payload content the prerequisite that an action is to be performed if the signal strength is above a certain threshold (which may also be provided), and further as an action that feedback shall be provided to the user U and that the scanning device 16 has to identify itself.

The advertising packet A1 may be received by the scanning device 16 already at times when it is sufficiently far away, i.e. outside the dashed lines in Figure 4. In this case, the scanning device 16 receives the advertising packet A1 (S2) verifies the identification information (S3) and reads the payload (S4).

Then, as given as a prerequisite in the payload content, compares the signal strength with the signal strength with which the advertising packet A1 has been received (S5). As the scanning device 16 is out of the area of the dashed lines, the signal strength of the advertising packet A1 lies below the threshold. Thus, the prerequisite given in the payload content is not met so that no action is taken by the scanning device 16.

If the scanning device 16 is moved closer to the interacting device 20 as indicated in Figure 4, the signal strength of the advertising packet A1 will eventually exceed the threshold.

In this case, the scanning device 16 will perform the action (S6) and provide the feedback to the user U and broadcasts an advertising packet A2 as a reaction by itself. The advertising packet A2 may include, as payload content, an identification of the scanning device 16 or information that the scanning device 16 has been in the vicinity of the interacting device 20.

This way, users U can be alerted if they enter a restricted or dangerous area. This is achieved by placing the interacting devices 20 close to hazards or exits to a restricted area.

As any establish wireless communication connections of the scanning device 16 are maintained, a user is not severely interrupted by the alert.

Further, the identification of the scanning device included in the payload information may be used by the interacting device 20 or the system control 22 to record the incident.

Figure 5 shows another embodiment in the same manner as Figure 4, wherein the embodiment substantially corresponds to the embodiment of Figure 4.

In difference to the embodiment of Figure 4, in the embodiment of Figure 5, the prerequisite is that the signal strength of the advertising packet A1 lies below a threshold and it includes a further prerequisite that the scanning device 16 does not have any establish wireless communication connection.

This second prerequisite may also be permanently stored in the scanning device 16 itself.

This way, if an unpaired scanning device 16 is moved away from the interacting device 20, as indicated by the arrow in Figure 5, the signal strength of the advertising signal A1 eventually falls below the threshold. Once this has happened, a feedback, e.g. an alarm, is given by the scanning device 16.

By this measure, it can be prevented that unpaired scanning device 16, which is unaccounted for at that moment, can be removed from a certain area and possibly be stolen.

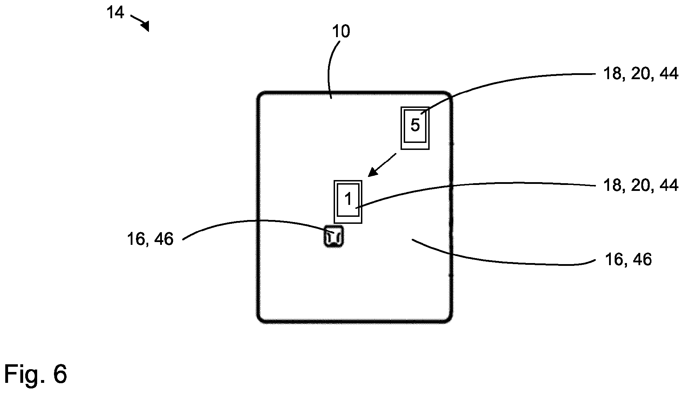

In a further embodiment, shown in Figure 6, the interacting device 20 is a portable device, in particular the connectivity device 18.

In this embodiment, the interacting device 20 is used to find a scanning device 16 that has been lost on the shop floor 10 or even in a location different from the shop floor 10.

The interacting device 20 is the first device 44 and the scanning device 16 the second device 46.

It is also conceivable that the interacting device 20 is the second device 44 and that the scanning device 16 is the first device 46. In this case, the scanning device 16 sends the advertising packet A1, for example in order to locate an interacting 20 device, e.g. a stationary device 19. An exemplary use case may be that a user is guided to a specific location, i.e. the location of the interacting device 20.

The interacting device 20 broadcasts the advertising packet A1 in regular intervals. The advertising packet A1 comprises as payload content the action that the scanning device 16 shall broadcast an advertising packet A2 as a reaction including as payload an indication of the distance to the interacting device 20.

The indication of the distance to the interacting device 20 may be the signal strength with which the advertising packet A1 has been received or an estimated distance to the interacting device 20 based on the signal strength.

Further, the advertising packet A1 may include as a prerequisite that the UUID (or any other identifier) of the second device 46 matches the UUID (or the respective other identifier) of the scanning device 16 that is being searched. If this prerequisite is part of the advertising packet A1, the scanning device 16 does not need to send its identification information in the advertising packet A2 broadcasted as a reaction.

The scanning device 16 that is being searched receives the advertising packet A1 (S2) verifies the identification information (S3) and reads the payload (S4).

The scanning device 16 that is being searched then compares its UUID (or the respective other identifier) with the UUID (or the respective other identifier) given as the prerequisite (S5).

The scanning device 16 that is being searched then performs the action (S6) and broadcasts an advertising packet A2 as a reaction by itself (S7).

The advertising packet A2 includes the indication of the distance and, if needed, the identification information of the scanning device 16.

The advertising packet A2 broadcasted as a reaction is then being received at S8 by the interacting device 20.

The interacting device 20 then verifies the identification information, if needed, and then, if the verification has been positive, reads the payload content of the advertising packet A2.

Based on the received indication of the distance to the interacting device 20 - being also the distance from the interacting device 20 to the scanning device 16 - the interacting device 20 then outputs the distance, e.g. 5m, to the scanning device 16 that is being searched to the user, e.g. via the display as shown in Figure 6, and/or by other means, for example acoustically.

As the advertising packets A1 are sent by the interacting device 20 in regular intervals, the interacting device 20 receives the indication of distance regularly in return and updates the output accordingly. Thus, a user may move the interacting device 20 and simultaneous receives information about the current to the scanning device 16 from the interacting device 20, as indicated in Figure 6. This allows the user to find the scanning device 16 that has been searched for.

## Claims

1. Method for operating a scanner system (14) comprising at least one scanning device (16) portable by a user (U), and at least one interacting device (20),
the scanning device (16) comprises a code reader (34) and a wireless communication module (38),
the interacting device (20) comprises a wireless communication module (40),
wherein the method comprises:
- broadcasting an advertising packet (A1) by a first device (44), being the interacting device (20) or the scanning device (16), the advertising packet (A1) comprising identification information and payload information,
- receiving the advertising packet (A1) by a second device (46), being the scanning device (16) or the interacting device (20), respectively,
- verifying the identification information of the advertising packet (A1) against stored, expected identification information by the second device (46), and
- if the verification has been positive, performing an action by the second device (46) based on the payload information of the advertising packet (A1),
wherein the action includes, always or when one or more prerequisites are met, broadcasting an advertising packet (A2) as a reaction.

2. Method according to claim 1, **characterized in that** the wireless communication modules (38, 40) of the interacting device (20) and of the scanning device (16) are Bluetooth Low Energy (BLE) modules.

3. Method according to claim 1 or 2, **characterized in that** the advertising packet (A2) broadcasted as a reaction comprises identification information of the second device (46) and payload information.

4. Method according to any of the preceding claims, **characterized in that** the action of the second device (46) includes, always or when one or more prerequisites are met, providing feedback to the user (U) carrying the second device (46), in particular optical feedback, acoustic feedback and/or tactile feedback.

5. Method according to any of the preceding claims, **characterized in that** the identification information of the advertising packet (A1), the identification information of the advertising packet (A2) broadcasted as a reaction, and/or the expected identification information comprises information for identifying a sender of the respective advertising packet or the expected sender, respectively, in particular a universally unique identifier (UUID) and/or a company identifier.

6. Method according to claim 5, **characterized in that** verifying the identification information of the advertising packet (A1) and/or the identification information of the advertising packet (A2) broadcasted as a reaction includes verifying that the advertising packet (A1, A2) has been send by the expected sender, in particular by comparing the UUID and/or the company identifier of the identification information of the advertising packet (A1, A2) and of the stored, expected identification information.

7. Method according to any of the preceding claims, **characterized in that** the payload information comprises payload content contained in structured data, in particular in a protocol buffer message, wherein the action by the second device (46) is based on the payload content of the structured data.

8. Method according to any of the preceding claims, **characterized in that** a wireless communication connection between the first device (44) and at least one of the at least one second device (46) using the respective wireless communication modules (38, 40) is active before the first device (44) broadcasts the advertising packet (A1) and/or that the wireless communication connection is maintained at least during receiving the advertising packet (A1) and verifying the identification information of the advertising packet (A1) by the second device (46), in particular the wireless communication connection is also maintained at least during the action by the second device (46); and/or
that the scanner system (14) comprises at least one connectivity device (18), wherein a wireless communication connection between the at least one connectivity device (18) and at least one of the at least one second device (46) using the respective wireless communication modules is active before the first device (44) broadcasts the advertising packet (A1) and/or that the wireless communication connection is maintained at least during receiving the advertising packet (A1) and verifying the identification information of the advertising packet (A1) by the second device (46), in particular the wireless communication connection is also maintained at least during the action by the second device (46); and/or
that no wireless communication connection between at least one of the at least one second device (46) and at least one of the first device (44) or a connectivity device (18) of the scanner system (14) using the respective wireless communication modules is active before the first device (44) broadcasts the advertising packet (A1).

9. Method according to any of the preceding claims, **characterized in that** the one or more prerequisites for broadcasting an advertising packet (A2) as a reaction by the second device (46) and/or for providing feedback to the user (U) by the second device (46) are stored in the second device (46) and/or are included in the advertising packet (A1) broadcasted by the first device (44), in particular in the payload information.

10. Method according to claim 9, **characterized in that** the one or more prerequisites include that the UUID of the second device (46) matches a provided pattern or provided UUID, that the signal strength of the advertising packet (A1) at the second device (46) is above a threshold; and/or that the signal strength of the advertising packet (A1) at the second device (46) is below a threshold.

11. Method according to any of the preceding claims, **characterized in that** the advertising packet (A2) broadcasted as a reaction comprises as part of the payload information, in particular as part of the payload content, telemetry data, in particular the current temperature of the second device (46) and/or the charging state of a battery.

12. Method according to any of the preceding claims, **characterized in that** the first device (44) and/or another second device (46), in particular another scanning device (16), receives the advertising packet (A2) broadcasted as a reaction, verifies the identification information and, if the verification has been positive, performs an action, in particular changing its configuration, providing feedback, broadcasting an advertising packet, and/or sending a corresponding message to a system control (22) of the scanner system (14).

13. Method according to any of the preceding claims, **characterized in that** the interacting device (20) is a stationary device (19) and/or a portable device, in particular a smart device and/or a connectivity device (18).

14. Scanner system comprising at least one scanning device (16) portable by a user (U), and a interacting device (20), wherein the at least one scanning device (16) and the interacting device (20) are configured to carry out a method according to any of the preceding claims, in particular wherein the scanner system (14) comprises an article of clothing (24), particularly a hand garment, which is designed to attach the scanning device (16) to the body of the user (U), in particular wherein the article of clothing (24) has an actuating element (26) which is connected to the scanning device (16) such that it serves as an input means for the scanning device (16) and/or can actuate the scanning device (16).

15. Scanning device for a scanner system (14), wherein the scanning device (16) is configured such that, in conjunction with a interacting device (20) of the scanner system (14), it is capable of carrying out a method according to any of the claims 1 to 13.
